(19) Europäisches Patentamt
European Patent Office
Office européen des brevets

(11) **EP 3 492 872 B1**

## (12) EUROPEAN PATENT SPECIFICATION

(45) Date of publication and mention
of the grant of the patent:
**09.09.2020 Bulletin 2020/37**

(21) Application number: **17204625.2**

(22) Date of filing: **30.11.2017**

(51) Int Cl.:
**G01C 21/34** *(2006.01)*     **G08G 1/01** *(2006.01)*
**G08G 1/00** *(2006.01)*

(54) **METHOD AND SYSTEM FOR STORING AND TRANSMITTING MEASUREMENT DATA FROM MEASURING VEHICLES**

VERFAHREN UND SYSTEM ZUM SPEICHERN UND ÜBERTRAGEN VON MESSDATEN VON MESSFAHRZEUGEN

PROCÉDÉ ET SYSTÈME POUR STOCKER ET TRANSMETTRE DES DONNÉES DE MESURE À PARTIR DE VÉHICULES DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2019 Bulletin 2019/23**

(73) Proprietor: **Bayerische Motoren Werke Aktiengesellschaft**
**80809 München (DE)**

(72) Inventors:
• **Heimrath, Andreas**
**82256 Fürstenfeldbruck (DE)**
• **Klöden, Horst**
**80797 München (DE)**
• **Klanner, Felix**
**639664 Singapore (SG)**

(56) References cited:
**DE-A1-102008 012 661     US-A1- 2015 221 216**

• **J. A. Farrell ET AL: "Best Practices for Surveying and Mapping Roadways and Intersections for Connected Vehicle Applications", , 15 May 2016 (2016-05-15), XP055452781, Retrieved from the Internet:**
**URL:http://www.cts.virginia.edu/wp-content /uploads/2014/04/Mapping-Final-Report-FINA L-20160915.pdf [retrieved on 2018-02-21]**

**Description**

The invention relates to a method and a system for acquiring, detecting, recording, storing and/or transmitting measurement data, i.e. measurement readings, especially sensor data and/or camera data, from a measuring vehicle.

In the development of improved or new vehicle functions or driver assistance systems, especially in the field of autonomous driving, it is required to collect data for different driving situations. To achieve this, sensor data is acquired and stored in at least one measuring vehicle. After a measurement drive, during which the measurement data is recorded and stored in the measuring vehicle, the collected measurement data is transferred to other computing systems to evaluate the recorded measurement data. For example, a fleet of measuring vehicles can be used to detect and record a high number of driving situations in a relatively short amount of time. The recorded sensor data is then evaluated in view of relevant driving situations or situations relevant for describing a specific driving situation for a function or assistance system.

Driving situations are described by the measurement data, which may comprise sensor readings form LIDAR, RADAR and/or optical sensors, e.g. a camera provided for monitoring an environment of the measuring vehicle. The sensor readings are recorded by the measuring vehicle during a real driving situation. During the measurement drive, typically more than 1000 sensor signals as well as signals from sensors surveilling the environment of the measuring vehicle are recorded. Even with state-of-the-art processing systems, a categorization of this huge amount of data cannot be realized. Hence, currently data required for analysis of driving situations for the development of the functions and/or assistance systems cannot be utilized as desired, especially if a driving situation occurs rarely.

During the measurement drive, a categorization (e.g. "country road at night with pedestrians") of the measurement data and an analysis of the measurement data not possible. Thus, important traffic situations may not be recorded and not be present or identifiable in the recorded data. However, if this data should be used for tests back in the lab or as parameters for a simulation, the measurement data recorded may not contain enough information to reflect reality. During the measurement drive there is also no continuous information regarding whether enough relevant situations or a sufficient amount of relevant situations are detected or recorded, which leads to a longer measurement period to make sure that enough relevant situations where recorded.

Additionally, when the recorded measurement data should be transferred to a post-processing system, the sheer amount of measurement data recorded that needs to be transferred contains redundant data for redundant driving situations, which leads to an increase of time required for the transfer, but also for the processing of the transferred data. For example, the recorded data is transferred to a remote computing system, e.g. a server, cloud or backend computing system on which the measurement data is then further evaluated. The processing of the measurement data also contributes tremendously to the overall time required to complete the development process.

J. A. Farrell et al. ("Best Practices for Surveying and Mapping Roadways and Intersections for Connected Vehicle Applications", 15 May 2016, http://www.cts.virginia.edu/wp-content/uploads/2014/04/ Mapping-Final-Report-FINAL-20160915.pdf) is a technology and methodology review of current mapping methods and technologies.

US 2015/221216 A1 relates to methods for differentiating high quality probe reports in a plurality of probe reports, including: (a) receiving, by a processor, a probe report from a probe source, wherein the probe report includes data indicative of a travel condition; (b) determining, by the processor, whether the probe report satisfies a criterion indicative of high quality data; and (c) identifying, by the processor, the probe report as being (i) suitable for use in modeling the travel condition if the probe report satisfies the criterion, or (ii) unsuitable for use in modeling the travel condition if the probe report does not satisfy the criterion.

DE 10 2008 012661 A1 relates to an update device for updating a digital map for a vehicle which has a multiplicity of sensors which measure the current traffic situation, the movement of the vehicle or else the road conditions. These measured values are transferred to a control center which evaluates them and then sends appropriate update data for updating the digital map to other vehicles.

The invention presents a solution addressing these disadvantages by providing a method, vehicle and system according to the independent claims. Further embodiments of the invention are subject to the dependent claims.

In a first aspect a method for storing and transmitting measurement data from measuring vehicles is provided, comprising the steps of determining a number of measurement categories, determining a number of required measurements for each of the determined measurement categories, starting a measurement campaign with a number of measuring vehicles, wherein each measuring vehicle is configured with the determined categories, changing a measurement setting for at least some of the number of measuring vehicles in case an information from at least one measuring vehicle is received indicating that a determined number of required measurements has been reached for at least one determined category. The change in the measurement setting can especially be a change in the route planning of at least one measuring vehicle.

The measurement setting can indicate that a specific location or area should not be approached and/or that measurement should be disabled in the specific location or area, especially for the indicated at least one determined category.

Each measuring vehicle can transmit a number of measurements obtained for each category. The measurement setting for at least some of the number of measuring vehicles may be changed to frequent a specific area or location and/or that measurement is enabled in the specific area or location, especially for the indicated at least one determined category and in case a determined number of required measurements is not reached by the vehicle fleet.

The measurement data per category can be transmitted from at least some of the measuring vehicles to a remote computing system via a wireless communication network. The wireless communication network can be based on wireless communication standard, e.g. GSM, UMTS, LTE4, LTE5, etc.

The indication from at least one measuring vehicle may be sent from the at least one measuring vehicle to the remote computing system if a feature vector is categorized for a category, for which the determined number of required measurements is reached. The feature vector can be part of or comprised in the measurement data and/or may be determined through processing steps on basis of the measurement data. Preferably the processing steps can be performed by the vehicle, e.g. by processing units of the vehicle.

When a feature vector can be categorized for a determined category, for which the determined number of required measurements was or is reached, the feature vector is added to the category, if its, preferably Euclidian, distance to a centroid of the category is greater than the distance of an already stored feature vector with the greatest distance to the centroid, in which case the already stored feature vector or the data belonging to this feature vector can be replaced by the feature vector categorized for the category or its data.

The required measurement data and/or the feature vector may comprise sensor data and camera data, especially CAN-Bus-signals, an acceleration in x- and/or y-direction, a speed, a yaw rate, a braking torque applied by a driver and/or a camera image.

The feature vector can be determined based on the required measurement data wherein detected or recorded signal data can be discretized and synchronized, by image features are extracted from camera images with a Convolutional Neural Network, and/or by forming a pre-feature vector per time step from the sensor data and /or camera data, and/or by reducing a dimensionality of the pre-feature vectors with an auto-encoder to form the feature vectors. The time step can be defined in seconds, 0.1 to 10 seconds, preferably 1 second.

The number of measurement categories can be determined based on a preset number of categories, preferably determined based on previously recorded vehicle measurement data, e.g. acceleration in the x and/or y direction, speed, yaw rate, driver desired braking torque and image features extracted from camera images preferably by a Convolutional Neural Network.

The previously recorded vehicle measurement data can be discretized and synchronized, forming a pre-feature vector per time step from the previously recorded vehicle measurement data.

An intrinsic dimensionality of the pre-feature vectors may be determined, and wherein the dimensionality of the pre-feature vectors can be reduced with an auto-encoder to form feature vectors.

Sequential feature vectors can be subsampled at intervals of predefined length. The interval length may be 1 to 5 seconds, preferably 2 seconds.

A cosine similarity between sequential feature vectors after subsampling may be calculated.

A threshold for the selection of feature vectors can be calculated, chosen such that at maximum half of the feature vectors belongs to measurements with a first vehicle speed while the feature vectors being of a second vehicle speed.

Feature vectors with a cosine similarity greater than or equal to the threshold can be selected to exclude outlier from clustering,

The determined number of categories can be determined for the selected feature vectors with a silhouettes index and k-means clustering, wherein the number of centroids of k-means can be varied and/or the local maximum may be chosen at low cluster number.

In another aspect, a measuring vehicle is provided configured to detect a measuring vehicle environment by recording measurement data and to categorize feature vectors derived from the measurement data to a number of determined categories, wherein a determined number of feature vectors to be recorded in each category is defined and e.g. set by wireless communication of the measuring vehicle with a remote computing system, and wherein the measuring vehicle is configured to send an information to the remote computing system indicating that the determined number of recorded feature vectors for a category is reached.

If a feature vector is categorized for a category, for which the determined number of required measurements is reached, the feature vector can be added to the category, if its, preferably Euclidian, distance to a centroid of the category is greater than the distance of an already stored feature vector with the greatest distance to the centroid, in which case the already stored feature vector is replaced by the vector categorized for the category.

The measuring vehicle may selectively record measurement data based on information received by the remote computing system.

The measuring vehicle may transmit the recorded data to the remote computing system via a wireless communication network.

In yet another aspect a system configured to perform the method presented herein comprising at least one measuring vehicle is provided. The system may also comprise the remote computing system and may employ a wireless communication network for communication.

The invention is now also described with reference to the figures:

Fig. 1 illustrates an architecture of a single-hidden layer auto-encoder.

Fig. 2 illustrates a model designed for feature selection.

Fig. 3 illustrates a method to compare image feature extraction.

Fig. 4 illustrates the determination of a category number with the silhouette index.

Fig. 5 illustrates a cosine similarity for sequential observations enabled shot-based clustering.

Fig. 6 illustrates a method step by a flowchart.

Fig. 7 illustrates the inventive method.

Fig. 8 shows an overview of the inventive system.

The invention presents a machine learning based management of measurement/sensor data collection and storage. The relevance of the measurement data is determined before the data is stored, which in turn allows for an optimized route management of fleet of measuring vehicles. In the method presented in which the measurement data is categorized based on features of the measurements data and storing the measurement date is also managed based thereon. For example a category can be "country road at night with pedestrians". Additionally, a targeted detection of relevant situations can be facilitated by active route management of the fleet.

For example, the method starts with predetermined set of categories determined based on the measurement campaign previously performed. E.g., 652 categories can be used. The categories can be determined based on pre-recorded datasets, e.g. a "Field operational test (FOT) dataset" or the "KITTI dataset". During the pre-recording drives, performed under normal driving conditions, as measurement data CAN bus signals and video signals from a front camera can be recorded at a specified frame rate, e.g. of 1 to 10 frames per seconds. The CAN bus signals can include signals such as the velocity of the vehicle. Frames can be extracted from the video files. The annotation per time step of the CAN bus signals makes it possible to associate them with the corresponding frame extracted from the video. During the pre-recording drives the data recorded can be labeled.

The auto-encoder is used for sensor data fusion and dimensionality reduction. Wang et al. had shown the potential of auto-encoders for dimensionality reduction [WYZ16].

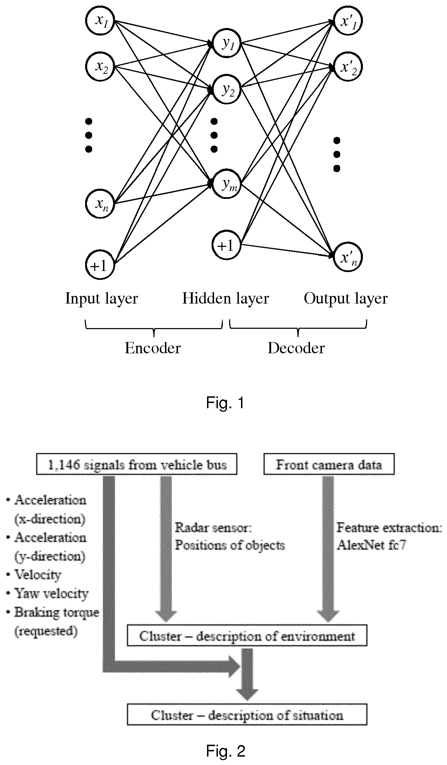

The auto-encoder is a neural network that consists of one input layer, at least one hidden layer and one output layer as shown in Fig. 1.

The single-hidden layer auto-encoder architecture is used here. The input layer and the hidden layer of the single-hidden layer auto-encoder are sometimes called encoder, i.e. the output of the hidden layer corresponds to a new representation of the net's input data. If the number of neurons in the hidden layer is smaller than the number of neurons in the input layer, dimensionality reduction can be achieved. Wang et al. were able to show that a high performance of the auto-encoder could be achieved if the number of hidden neurons was set to the intrinsic dimensionality of the dataset. Here, the number of hidden neurons is exemplarily set to 14.

Analogously, the output layer of the net can be considered as a decoder. This decoder transforms the output of the hidden layer into the representation in the net's output space. The idea of training an auto-encoder is that the representation of the dataset in the input space and in the output space of the auto-encoder should be the same. This property is described by the reconstruction error, which is a quality measure to be employed in the training process of the network [WYZ16].

Here, backpropagation with the scaled conjugate gradient descent is used for training in combination with a logistic sigmoid function as the transfer function [Møl93].

After subsequent scaling, the dataset to be used is obtained. The dataset consists of sequentially-ordered feature vectors.

Pre-recorded FOT data is chosen as a foundation of the method to provide an appropriate sample from pre-recorded FOT data for evaluation. Unlike data obtained from simulations for evaluation, using pre-recorded FOT data directly does not suffer from possible errors and assumptions in the parametrization of the simulation. Actually, real-world data can be directly presented to the system under investigation.

The idea is that the sample represents the variety of possible scenarios in traffic as well as rare scenarios. Furthermore, the method provides this sample with any human categorization of the scenarios to avoid any bias from human experience and to provide scalability to the approach. However, providing a sample with respect to these requirements made it necessary to identify homogeneous subsets of the data in an unsupervised manner. Therefore, clustering is used.

Stratification, which is combined with clustering in previous studies relying on simple datasets, is used to obtain a sample that reflected the variety of traffic situations. Although, the two core elements of the algorithm, clustering and stratification seemed to be clear, major processing is necessary to get the sample from pre-recorded FOT data.

The pre-recorded FOT dataset provided signals from the vehicle bus and a front camera image per time step. But, it is not obvious which signals should be used to perform clustering and subsequent stratification.

Therefore, a model for feature selection is used based on the importance of domain and application knowledge and signals that are used in previous studies on vehicle signals [WZWD14, HA15, FTT+16]. Furthermore, signals that are available in any car and non-industry specific signals are taken into consideration. The model allows for meaningful and homogeneous clusters, which are a requirement for stratification.

In the model, two levels of abstraction are assumed (cf. Fig. 2, which shows an exemplary illustration of a model). The model is designed for feature selection to handle the huge variety of available signals. A combination of features from front camera images and the positions of the objects surrounding the ego-vehicle provided clusters based on a description of the environment. To obtain clusters based on a description of the actual situation, it is necessary to add further ego-vehicle signals such as the acceleration.

The first level is represented by clusters that are formed with respect to the ego-vehicles environment. The description of the environment is particular important to be able to provide samples for the evaluation of vision-based systems. Furthermore, the descriptions of the environment introduces information on other vehicles and objects to interact with, which is crucial to evaluating many machine learning-based systems - particularly in case of detection systems. Therefore, image features from the front camera as well as the positions of other vehicles in x- and y- direction provided e.g. by the front radar sensor are considered.

However, just looking at an image does not describe the actual situation. If the front camera shows an image of a very close wall, the velocity of the ego-vehicle makes the difference. Actually if the car is parking, the situation is not as dangerous as approaching at a velocity of 100 km/h. Therefore, at least some of the following ego-vehicle signals are also chosen: acceleration in x- and y-direction, velocity, yaw velocity and the braking torque requested by the driver. Previous approaches on the categorization of vehicle signals neglected the braking torque requested by the driver, which could provide an important evaluation of the current traffic situation from a human perspective.

Combining camera data and sensor signals for the environment description with ego-vehicle data leads to the second level of the model. Here, clusters are obtained which do not only describe the environment, but are also able to describe the actual situation due to the selection of signals. An analysis of the correlation between the sensor data, e.g. signals from the vehicle bus supports the selection of signals.

In particular, the front camera can be used as a sensor describing objects in a certain context. This is essential to provide meaningful clusters to the method suggested herein, which could be associated with particular situations in traffic. However, it is necessary to extract image features from the images provided by the camera to make these observations accessible to clustering. Actually, a variety of methods for image feature extraction is known, which ranges from hand-crafted features to deep features extracted from a convolutional neural network (CNN's) output.

Despite the potential of the CNN-based approaches for feature extraction, the low resolution of the input images from the front camera (compared to the high resolution images used nowadays to train a CNN), the lack of customized data for training and the use of a pre-trained CNN for feature extraction made it impossible to decide a priori whether CNN-based feature extraction would be superior to hand-crafted feature extraction. Therefore, an approach is developed to identify the most suitable method for image feature extraction. The approach to identify the most suitable method for image feature extraction is based on the assumption that a good partition of a dataset relies on compact and well-separated clusters. Furthermore, the clustering algorithms used should not only be able to identify compact and well-separated, but also meaningful clusters, which can be characterized by distinct attributes with relevance to situations in traffic. Therefore, the approach takes benefit from the fact that pre-recorded FOT dataset is annotated with labels that described situations the vehicle has to face. These situations are considered relevant to form meaningful cluster.

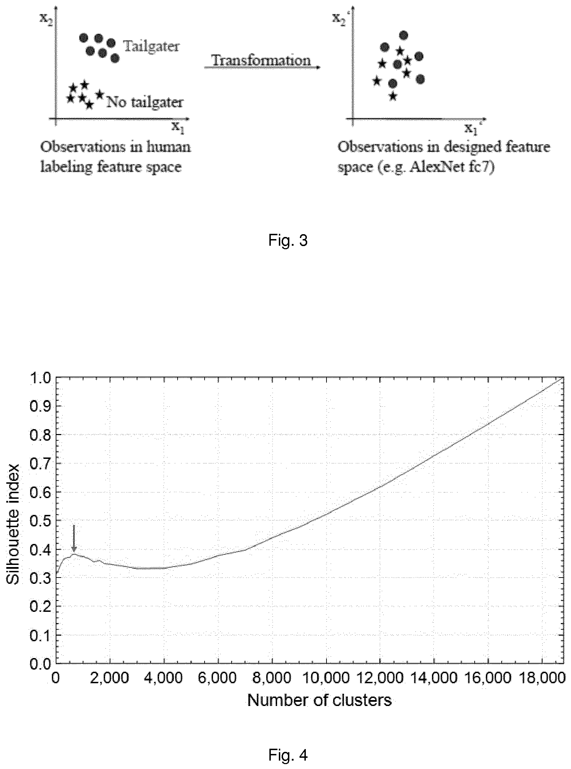

A tailgater is defined as a vehicle which forcefully tries to enter the gap between the ego-vehicle and the vehicle in front of the ego-vehicle. The example of tailgaters should be used to illustrate the basic concept of the approach to compare different methods for image feature extraction. The concept is also shown in Fig. 3.

For humans, it is usually possible to distinguish between observations with tailgaters and observations without them when shown an image from the front camera. Actually, this leads towards two compact and well-separated clusters in what shall be called human labeling feature space. When clusters are identified by clustering algorithms, the possibility to distinguish between observations with tailgaters and observations without them should be conserved to support the formation of meaningful and homogeneous clusters.

Extracting image features from the camera image is therefore interpreted as a transformation of an observation's representation, i.e. of an image, from the human labeling feature space to a designed feature space. The transformation and the observation's representation in the new feature space are determined by the choice of a particular method for image feature extraction. Actually, the method for image feature extraction which conserves best the separability between the two classes also in the new feature space, here observations with and without tailgaters, is considered the method of choice to obtain compact and well-separated clusters. This method for image feature extraction is then also expected to support the identification of meaningful clusters with respect to tailgaters during the clustering step in the major method for evaluating systems. In the end, this approach can be considered as a way to identify the method for image feature extraction which is able to guarantee a minimum level of separability of clusters in the new feature space with respect to attribute considered as relevant to for meaningful clusters.

To realize the basic concept of the approach introduced above, it is necessary to identify a way to describe cluster quality even in high dimensional space.

The way to assess cluster quality adopted from Howland et al. is described in the following [HJP03]: The concept of the between-cluster scatter matrix ($S_B$) and the within-cluster scatter matrix ($S_W$), or rather the *trace* of the individual cluster matrix, is used to describe if the clusters are well-separated and compact. Actually, a high value of *trace*($S_B$) is favored to obtain compact clusters, whereas a small value of *trace*($S_W$) is preferred to support well-separated clusters. Therefore, the overall cluster quality can be described by the term

$$q = \frac{trace(S_B)}{trace(S_w)},$$

where high values of q indicate a favorable quality of the clusters: The definition of the scatter matrices requires the definition of the mean vector $m_i$ of the *i*-th cluster and the mean vector m of a dataset $X = \{x_1, x_2, ..., x_N\}$, which includes N observations. The mean vector m is

$$m = \frac{1}{N} \cdot \sum_{k=1}^{N} x_k$$

and the mean vector $m_i$ of the *i*-th cluster is

$$m_i = \frac{1}{N_i} \cdot \sum_{k=1}^{N} I(x_k, i) \cdot x_k,$$

where $I(x_k, i)$ indicates the observations of the *i*-th cluster. This leads towards the between-cluster scatter matrix ($S_B$) of c clusters

$$S_B = \sum_{i=1}^{c} N_i \cdot \left[ (m_i - m)(m_i - m)^T \right]$$

and the scatter matrix of the *i*-th cluster ($S_i$)

$$S_i = \sum_{k=1}^{N_i} \left[ (x_{i,k} - m_i)(x_{i,k} - m_i)^T \right],$$

where $x_{i,k}$ is the *k*-th observation of the *i*-th cluster. The within-cluster scatter matrix ($S_w$) of c clusters results as

$$S_w = \sum_{i=1}^{c} S_i.$$

It is important to mention that a direct comparison between different methods for image feature extraction required that their observations are represented in feature spaces of the same dimension. Therefore, the feature vectors resulting from image feature extraction are reduced to the same dimension by an auto-encoder. The quality indicator

$$q = \frac{trace(S_B)}{trace(S_w)}$$

is determined with respect to several labels, which led to a value of the the quality indicator for each label. Each time the quality indicator is determined for a label, the number of the observations assigned to the label is equal to the number of observations not assigned to the label. The total number of observations is also kept constant.

In the end, the introduction of the quality indicator

$$q = \frac{trace(S_B)}{trace(S_w)}$$

made it possible to compare the cluster quality with respect to different labels in the designed feature space for different methods of image feature extraction. Therefore, a method for image feature extraction could be selected that conserved best the assumption of perfect separability in human labeling feature space.

To make a final decision in favor of a method for image feature extraction, the one which is superior in most categories of label as well as in the categories trigger (label indicating a dangerous situation) and time of day is preferred.

The model for signal selection makes the pre-recorded FOT dataset accessible to the actual method for providing the sample. The sample is constituted by discrete observations from the pre-recorded FOT dataset. As already mentioned, the two major steps of the method are clustering and stratification.

However, the k-means algorithm which is chosen as the approach to be used required the number of clusters as an input parameter. Therefore, the method suggested here is based on three steps:

- Data preparation
- Determining the optimal number of clusters
- Clustering and stratification for sampling

Data preparation provides the necessary dataset to determine the optimal number of clusters. It is also used in clustering and stratification for sampling. During data preparation, the required signals from the vehicle bus are extracted and combined with deep features extracted from the corresponding image of the camera by AlexNet. The signals from the vehicle bus and deep features can be extracted and concatenated time step-wise. K-means clustering is a widely used algorithm and its underlying idea is already published in 1956 by Steinhaus [Ste56, ORSS06]. The k-means++ algorithm, can improve the speed as well as the accuracy of the basic k-means algorithm [AV07]. AlexNet is a convolutional neural network, which is constituted by five convolutional and three fully-connected layers [KSH12]. The first, second and fifth convolutional layer are followed by a max-pooling layer. A major characteristic of AlexNet at the time of its launch is the introduction of dropout layers after the first and second convolutional layer to reduce overfitting [KSH12].

Afterwards, the resulting variables of the concatenation is normalized and scaled in the interval from 0 to 1 to form pre-feature vectors. Then, the intrinsic dimensionality is determined by maximum likelihood estimation to be 14. The auto-encoder can be used to reduce the pre-feature vectors to the intrinsic dimensionality.

The optimal number of clusters is determined according to the following steps:

a) The dataset obtained from the described data preparation is subsampled with step size of 2 seconds to reduce fluctuation of the features in the dataset.

b) A threshold for the cosine similarity is determined so that half of the feature vectors taken from the subsample belonged to an observation with a velocity above 0 km/h. So, a bias form the various scenes in traffic jam in the pre-recorded FOT dataset could be avoided. A threshold of 0.955 is determined.

The cosine similarity ($Similarity_{cos}$) is used to compare the similarity between temporally adjacent or sequential feature vectors. The cosine similarity is an indicator of similarity from information retrieval. Given two vectors in feature space, $x_1$ and $x_2$, the cosine similarity results as

$$Similarity_{cos} = \frac{\langle x_1, x_2 \rangle}{\|x_1\|_2 \cdot \|x_2\|_2,}$$

where $<x_1, x_2>$ denotes the scalar product of $x_1$ and $x2$. The Euclidean norm of vector $x_i$ is indicated by $\|x_i\|_2$.

c) Feature vectors from the subsample associated with a cosine similarity above a certain threshold, e.g. of about 0.9, especially 0.955 are chosen to be analyzed. They are referred to as the purified dataset. The selection according to cosine similarity made sure that only observations that represented general situations contribute to the definition of clusters. The cluster centroid should afterwards be able to characterize a general situation in traffic and outliers have a larger distance from the centroid. Observations such as the one with a finger in front of the camera could be successfully excluded from cluster identification by the cosine similarity approach.

d) The feature vectors selected in the previous step are used for clustering with k-means. The parameter for the number of clusters is continuously increased and the silhouette index is monitored. The smallest value of the parameter that corresponded to a major local maximum of the silhouette index is chosen as the optimal number of clusters. Here, exemplarily the optimal number of 652 clusters is identified.

The silhouette index, which is a cluster quality indices, is used to assess the quality of clustering and to determine the parameters of the clustering algorithms [Rou87, VCH10, AGM+13]. Actually, the silhouette index belongs to the indices for internal validation requires, which only require the information on the partition provided by the clustering algorithm, i.e. no external information such as labels. This fact makes internal validation a feasible approach in case of large datasets when labels are not available. Therefore, the approach also strongly relies on internal validation for cluster and algorithm assessment.

Due to the good performance of the Silhouette index (Sil), particularly in cases such as the presence of noise or heterogeneous density of the clusters, it is chosen as a quality indicator and an approach to determine the parameters of the clustering algorithms [AGM+13]: The definition of the Silhouette index is based on partitioning a dataset $X = \{x_1, x_2, ..., x_N\}$ of N elements into k disjoint subsets that form the set of clusters $C = \{C_1, C_2, ..., C_k\}$. d designates the distance metric, e.g. the Euclidean distance. The Silhoutte index incorporates information on the cohesion of the cluster members given by the $a(x_i, C_k)$, which describes the mean distance between sample $x_i$ and the other members of the same cluster. Furthermore, it relies on $b(x_i, C_k)$, which is the minimum mean distance between sample xi and the members of other clusters, to describe the separation of the individual clusters. Given the indicators of cohesion and separation, which are

$$a(\boldsymbol{x_i}, C_k) = \frac{1}{|C_k|} \cdot \sum_{\boldsymbol{x_j} \in C_k} d(\boldsymbol{x_i}, \boldsymbol{x_j})$$

and

$$b(\boldsymbol{x_i}, C_k) = \min_{C_l \in C \setminus C_k} \left\{ \frac{1}{|C_l|} \cdot \sum_{\boldsymbol{x_j} \in C_l} d(\boldsymbol{x_i}, \boldsymbol{x_j}) \right\},$$

the silhouette index results as

$$Sil = Sil(C) = \frac{1}{N} \cdot \sum_{C_k \in C} \sum_{\boldsymbol{x_i} \in C_k} \frac{b(\boldsymbol{x_i}, C_k) - a(\boldsymbol{x_i}, C_k)}{max\{a(\boldsymbol{x_i}, C_k), b(\boldsymbol{x_i}, C_k)\}}.$$

The value of the Silhouette index ranges from -1 to +1, where +1 can be considered best. This results from the interpretation of the term $\frac{b(\boldsymbol{x_i}, C_k) - a(\boldsymbol{x_i}, C_k)}{max\{a(\boldsymbol{x_i}, C_k), b(\boldsymbol{x_i}, C_k)\}}$ for an individual sample $x_i$. A value close to +1 means a good matching of the sample $x_i$ to its own cluster, whereas a value close to -1 indicates that $x_i$ should probably be assigned to another cluster. A value of the Silhouette index which is close to 0 stresses that it is definitely not clear which of the possible clusters $x_i$ should be assigned to [Rou87].

In a nutshell, the method can be summarized as follows:

1. The measurement data or sensor data detected and recorded in the measuring vehicle is discretized and synchronized. An acceleration in x- and y-direction, a speed, yaw speed or rate, the brake momentum applied by the driver and/or picture features from the images recorded at the camera are used to build the pre-feature vector. To derive the picture features, the output of the camera is processed by a convolutional neural network (CNN). The pre-feature vectors are determined per timestamp from the input signals especially the sensor signals and the camera output.

2. The intrinsic dimension is determined and the dimension of the pre-feature vector is reduced to create the feature of vectors with an auto-encoder.

3. Then, the subsampling of the sequential feature vectors is performed with a predefined subsampling time step of, e.g. 2 seconds.

4. After the subsampling, the cosine similarity is determined from the (remaining) feature vectors.

5. The threshold value is determined for a selection of feature vectors. The threshold is chosen in a way that half of the feature vectors showing a speed measurement of the vehicle speed of 0 km/h at max while the other half comprises a vehicle speed not being 0 km/h and especially a speed greater than 0 km/h.

6. Then, feature vectors with cosine similarity the same or greater than the threshold value are selected to exclude outliers in the cluster creation process. This is illustrated in Fig. 4.

7. Afterwards a number of categories is determined with the silhouette index and k-means clustering. The number of centroids of k-means is varied and local maximum is chosen at a low number of clusters.

Given the prepared dataset and the optimal number of clusters, the sample can be obtained. However, clustering could be performed as observations-based clustering or shot-based cluster, where shot-based clustering is recommended for performance reasons and to support cluster homogeneity.

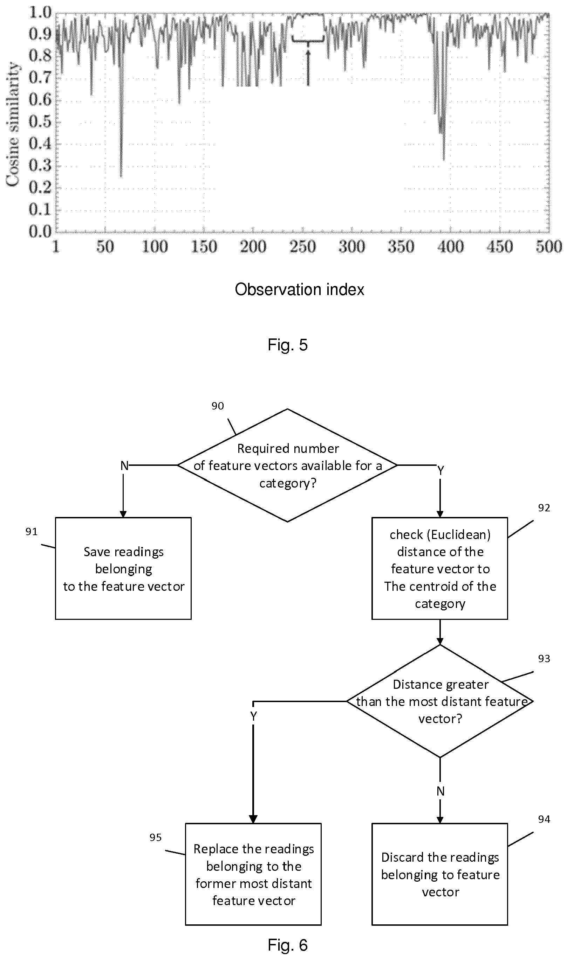

For shot-based clustering, the formation of the shots is illustrated in Fig. 5. The cosine similarity between temporally adjacent feature vectors from the total dataset is calculated. A threshold of 0.9 is defined by inspection and temporally adjacent feature vectors are assigned to a shot until a drop in the cosine similarity below 0.9 is reached. Then a new shot is started. Each shot is characterized by a vector corresponding to the mean of its member feature vectors. k-means++ clustering with 652 clusters is run directly on the vectors characterizing the shots. After clustering, any member feature vector of a shot could be assigned to the cluster its shot is characterized by.

For observation-based clustering, k-means++ clustering with 652 clusters is run on the purified dataset of step (d) in the procedure of determining the optimal number of clusters. The resulting centroids of the cluster are obtained and the feature vectors of the total dataset are assigned to their closest centroid with respect to Euclidean distance.

The sample could be obtained according to the following steps:

a) Shot-based or observations-based clustering are run on the total dataset.

b) Stratification is performed on the total dataset. In general, each cluster is considered as a stratum. However, only one subset per cluster could also be considered as a stratum, such as in case of the case study, if labels to identify the subset are available for a particular question. In the case study, only subsets of tailgaters are considered.

c) The sample is obtained by drawing at least one observation from each stratum, but the total number of observations drawn from a stratum corresponded to its proportion of the total number of observations.

The sample could then be used for the evaluation of the automotive machine learning-based system. The procedure is independent of the system which is evaluated.

After determining the categories, a model for online clustering (e.g., using the BIRCH algorithm) based on the selected feature vectors from step 6 of determining the number of categories are calculated. The model is then transferred to the measuring vehicle.

The Balanced Iterative Reducing and Clustering using Hierarchies (BIRCH) algorithm is explicitly suggested to be used for the efficient clustering of very large datasets and to deal with noise, i.e. data points that differ from an underlying model or pattern [ZRL96]: BIRCH is based on the concept of so-called clustering features (CF) and constructing a height-balanced tree called clustering feature tree (CF tree) to structure the input data. A clustering feature describes a corresponding cluster by three values, i.e. the number of data points in the cluster, the linear sum $LS = sum_{i=1}^{N}$ $x_i$ and the squared sum $SS = sum_{i=1}^{N} x_i^2,$ where $x_i$ is one of $N$ data points in the cluster.

The construction of the CF tree is determined by the two parameters of the BIRCH algorithm, the branching factor BF and the threshold T.

Every non-leaf node of the tree corresponds to a cluster which is made up by the subclusters represented by the node's children. Actually, the maximum number of subclusters of a node is given by BF. The CF of a node can be calculated directly from the CFs of its children. A leaf node can also represent several subclusters. However, the radius $r$ of the subclusters corresponding to a leaf node has to be smaller than the threshold T:

$$r = \sqrt{\frac{\sum_{i=1}^{N}(x_i - x_0)^2}{N}},$$

where $x_0$ is the centroid of the corresponding cluster consisting of N data points $x_i$, $i = 1,...N$.

As mentioned above, the number of subclusters per nonleaf node is limited by BF, but also the leaf nodes have a limited number of associated subclusters. This limiting number is referred to as number of entries of the respective node. If a new sample is assigned to a subcluster of a leaf which then no longer satisfies the condition T, the subcluster is split and is assigned to the leaf node as a new entry. However, if the maximum number of entries of the leaf node is reached, then also the leaf node has to be split.

This principle is continued analogously up to the root, i.e. if adding a new sample leads towards surpassing the number of possible subclusters in a nonleaf node given by BF, the node is split and the subclusters are divided between both of these nodes.

New samples are inserted from the root of the CF tree and they follow the path of the closest subclusters until a leaf node is reached. After that, the CF values or even the structure of the tree has to be adjusted according to BF and T as described above.

The complete BIRCH algorithm can be described by four phases [ZRL96]:

1. Building an initial CF tree.
2. Rebuilding a smaller CF tree by scanning the entries of the initial tree's leafs (Considered optional by authors of BIRCH).
3. Applying a standard clustering algorithm to the subclusters represented by their CF vectors.
4. Refining the clusters by assigning all data points to the closest centroid obtained from clusters in step 3 (Considered optional by authors of BIRCH).

Here, agglomerative clustering ia used in step 3 of BIRCH. Agglomerative clustering starts from the initialization that any data point represents its own cluster [FAT+14]. This bottom-up approach recursively merges respective clusters until all input data point are included in one cluster, which relied on the Ward linkage criterion [Jr.63, ML14]. The target number of clusters is given before clustering.

When the number of categories is known, the method is performed as follows:

1. CAN bus signals and camera signals in the measuring vehicle are continuously detected in the measuring vehicle: acceleration in x- and y-direction, speed, yaw rate, braking torque applied by a driver and e.g. front camera images.
2. The detected signals are discretized and synchronized. Image features are extracted from camera images with the or another Convolutional Neural Network (CNN). Forming a pre-feature vector per time step from the signals.
3. Reduction of the dimensionality of the pre-feature vectors to form the feature vectors with the or another auto-encoder.
4. The feature vector is assigned to a category by a model provided for online clustering.
5. The number of already existing feature vectors in the same category is determined.
6. Adapting the route management for the measurement drive:
The backend calculates the optimal routes for the test drives. The current location is determined by GPS. A GPS positioning unit can be present in the measuring vehicle.

   a. If the feature vector is discarded, a message is sent to the backend, so that this fact can be taken into account in the cost function for the route calculation. As a result, this location is no longer be approached or frequented by the measuring vehicle or other measuring vehicles of the measuring fleet in the future.
   b. If the feature vector is accepted and measured values for this category are still needed, then the current location is taken into account in the cost function for the route calculation. Therefore, the location will be approached or frequented especially to a higher degree by the measuring vehicle or other measuring vehicles of the measuring fleet.

7. Updating of the number of measured values per category available across all fleet vehicles and adaptation of the route of the measuring vehicle.
8. The data can be read when reaching the maximum storage volume in the vehicle or transferred via mobile phone to the backend.

Regarding step 5 and in view of Fig. 6, the number of already existing feature vectors in the same category is determined includes: Determining whether the required number of feature vectors available in a category (step 90). If this is not the case (path N), save the readings belonging to the feature vector regarded for the category (step 91). If this is the case (path Y), check the (Euclidean) distance of the feature vector to the centroid of the category (step 92). If the distance is greater than the most distant feature vector (step 93), replace the readings belonging to the former most distant feature vector with the readings of the current feature vector (path Y, step 95). Otherwise (path N), discard the readings belonging to current feature vector (step 94).

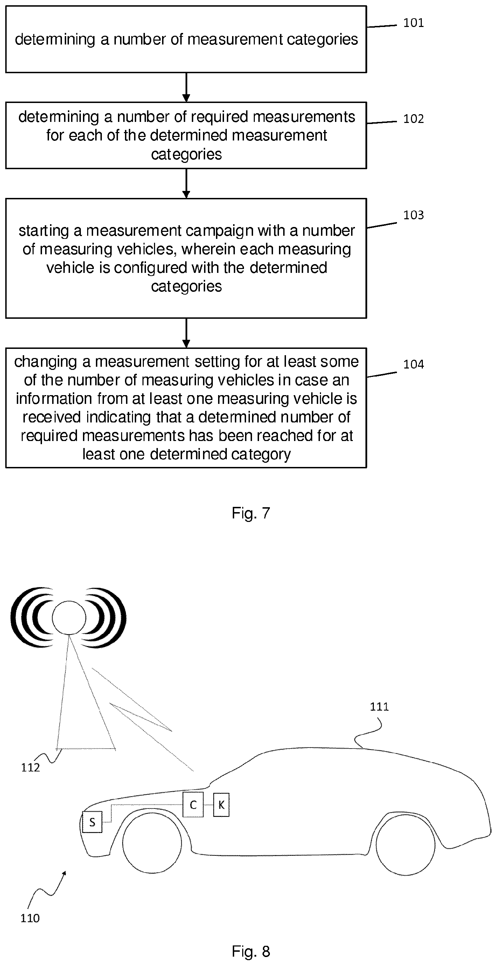

Core features of the Invention can hence be summarized as follows and shown in Fig. 7: In step 101, a number of measurement categories is determined. In step 102, a number of required measurements for each of the determined measurement categories is determined. In step 103 a measurement campaign is started with a number of measuring vehicles, wherein each measuring vehicle is configured with the determined categories, and in step 104 a measurement setting for at least some of the number of measuring vehicles is changed in case an information from at least one measuring vehicle is received indicating that a determined number of required measurements has been reached for at least one determined category.

As a result, recording of large data volumes in the context of autonomous driving and large Field Operational Tests (FOT) with more than 1,000 ego vehicle signals as well as signals from environmental perception sensors (RADAR, LIDAR and camera) is facilitated:

An initialization of the vehicles with necessary categories (e.g., highway at night with oncoming traffic) for the subdivision of the data allows optimal routes calculations for the measurement campaign under cost and time criteria. Routes are selected for the measuring vehicles, so that only the required or sufficient amount of data is recorded, e.g. for the necessary categories. The amount of available data per category can be monitored in real time and the route can be adjusted. This shortens the total duration of the measurement campaign.

Moreover, captured data is categorized in the vehicle while driving and only relevant non-redundant situations are stored on local storage media in the vehicle.

As a result, the time required to change or read the local storage media can be reduced, which also leads to a reduction in staff costs and the recording method can scale even to large fleets.

By using the categorization at recording time, less but only relevant data is captured. The reduction in the recorded data volume also allows to transfer the data via mobile communication networks in terms of costs. The transmission via mobile communication networks allows shortening the measuring campaign since there are no fixed times for changing or reading the storage media local to the measuring vehicle. The data can be transmitted to the remote computing system during the measuring drive.

By shortening the measurement campaigns, the whole development can be accelerated. By categorizing the stored data in the vehicle during the drive also later server-side effort for the processing of the recorded data is eliminated.

Fig. 8 shows a system 110 with a measuring vehicle 111 and a remote computing system 112. The measuring vehicle 111 comprises at least ones sensor S and/or camera and a computing unit C. Additional, the measuring vehicle 111 comprises a communication unit K to communicate with the remote computing system 112 through wired or wireless communication. The sensor S provides sensor signals as part of the measurement data.

**Bibliography**

[AGM+13] Olatz Arbelaitz, Ibai Gurrutxaga, Javier Muguerza, Jes_us M. P_erez,and I~nigo Perona. An extensive comparative study of cluster validityindices. Pattern Recognition, 46(1):243{256, 2013.

[AV07] David Arthur and Sergei Vassilvitskii. k-means++: the advantagesof careful seeding. In Nikhil Bansal, Kirk Pruhs, and Cli_ord Stein,editors, Proceedings of the Eighteenth Annual ACM-SIAM Sympo-sium on Discrete Algorithms, SODA 2007, New Orleans, Louisiana,USA, January 7-9, 2007, pages 1027 - 1035. SIAM, 2007.

[FTT+16] Yusuke Fuchida, Tadahiro Taniguchi, Toshiaki Takano, TakumaMori, Kazuhito Takenaka, and Takashi Bando. Driving word2vec:Distributed semantic vector representation for symbolized naturalisticdriving data. In 2016 IEEE Intelligent Vehicles Symposium, IV2016, Gotenburg, Sweden, June 19-22, 2016, pages 1313 - 1320. IEEE,2016.

[HA15] Bryan Higgs and Montasir M. Abbas. Segmentation and clustering ofcar-following behavior: Recognition of driving patterns. IEEE Trans.Intelligent Transportation Systems, 16(1):81 - 90, 2015.

[HJP03] Peg Howland, Moongu Jeon, and Haesun Park. Structure preservingdimension reduction for clustered text data based on the generalizedsingular value decomposition. SIAM J. Matrix Analysis Applications,25(1):165 - 179, 2003.

[Jr.63] Joe H. Ward Jr. Hierarchical grouping to optimize an objective function.Journal of the American Statistical Association, 58(301):236 - 244, 1963.

[KSH12] Alex Krizhevsky, Ilya Sutskever, and Geo_rey E. Hinton. Imagenetclassi_cation with deep convolutional neural networks. In Peter L.Bartlett, Fernando C. N. Pereira, Christopher J. C. Burges, L eonBottou, and Kilian Q. Weinberger, editors, Advances in Neural Information Processing Systems 25: 26th Annual Conference on Neu-ral Information Processing Systems 2012. Proceedings of a meetingheld December 3-6, 2012, Lake Tahoe, Nevada, United States., pages 1106 -1114, 2012.

[ML14] Fionn Murtagh and Pierre Legendre. Ward's hierarchical agglomerativeclustering method: Which algorithms implement ward's criterion?J. Classi_cation, 31(3):274 - 295, 2014.

[Møl93] Martin Fodslette M_ller. A scaled conjugate gradient algorithm for fast supervised learning. Neural Networks, 6(4):525 - 533, 1993.

[ORSS06] R. Ostrovsky, Y. Rabani, L. J. Schulman, and C. Swamy. The effectivenessof lloyd-type methods for the k-means problem. In 200647th Annual IEEE Symposium on Foundations of Computer Science (FOCS'06), pages 165 - 176, Oct 2006.

[Rou87] Peter J. Rousseeuw. Silhouettes: A graphical aid to the interpretation and validation of cluster analysis. Journal of Computational and Applied Mathematics, 20:53 - 65, 1987.

[Ste56] Hugo Steinhaus. Sur la division des corps mat_eriels en parties. Bull.Acad. Polon. Sci. CI. III. 4, pages 801 - 804, 1956.

[VCH10] Lucas Vendramin, Ricardo J. G. B. Campello, and Eduardo R. Hruschka.Relative clustering validity criteria: A comparative overview.Statistical Analysis and Data Mining, 3(4):209 - 235, 2010.

[WYZ16] Yasi Wang, Hongxun Yao, and Sicheng Zhao. Auto-encoder baseddimensionality reduction. Neurocomputing, 184:232 - 242, 2016.

[WZWD14] Xindong Wu, Xingquan Zhu, Gong-Qing Wu, and Wei Ding. Datamining with big data. IEEE Trans. Knowl. Data Eng., 26(1):97 - 107,2014.

[ZRL96] Tian Zhang, Raghu Ramakrishnan, and Miron Livny. BIRCH: ane_cient data clustering method for very large databases. In H. V.Jagadish and Inderpal Singh Mumick, editors, Proceedings of the 1996ACM SIGMOD International Conference on Management of Data,Montreal, Quebec, Canada, June 4-6, 1996., pages 103 - 114. ACMPress, 1996.

**Claims**

1. Method for storing and transmitting measurement data from a fleet of measuring vehicles (111), comprising the steps of,
   determining (101) a plurality of measurement categories, wherein the measurement categories correspond to driving situations,
   determining (102) a number of required measurements for each of the determined measurement categories,
   starting (103) a measurement campaign with the fleet of measuring vehicles (111) to record measurement data, wherein each measuring vehicle (111) is configured to record measurement data according to the determined measurement categories, wherein a plurality of feature vectors derived from the measurement data is categorized to the determined measurement categories, and
   changing (104) a measurement setting for at least some of the fleet of measuring vehicles (111) in case an information from at least one measuring vehicle (111) is received indicating that the determined number of required measurements has been reached for at least one determined category, wherein the change in the measurement setting is a change in a route planning of the at least some of the fleet of measuring vehicles (111).

2. Method according to claim 1, wherein the measurement setting indicates that a specific location or specific area should not be approached and/or that measurement should be disabled in the specific location or area, especially for the at least one indicated determined category.

3. Method according to claim 1 or 2, wherein each measuring vehicle (111) transmits a number of measurements obtained for each category and wherein the measurement setting for at least some of the fleet of measuring vehicles (111) is changed to frequent a specific area or location and/or that measurement is enabled in the area or at the location, especially for the indicated at least one determined category and in case a determined number of required measurements is not reached by the vehicle fleet.

4. Method according to any one of the preceding claims, wherein the measurement data per category are transmitted from at least some of the measuring vehicles (111) to a remote computing system (112) via a wireless communication network.

5. Method according to any one of the preceding claims, wherein an indication from at least one measuring vehicle (111) is sent from said at least one measuring vehicle (111) to the remote computing system (112) if a feature vector of the plurality of feature vectors is categorized for a category of the categories, for which the determined number of required measurements is reached.

6. Method according to any one of the preceding claims, wherein, when a feature vector of the plurality of feature vectors is categorized for a determined measurement category of the determined measurement categories, for which the determined number of required measurements was or is reached, the feature vector is added to the category, if its, preferably Euclidian, distance to a centroid of the category is greater than the distance of an already stored feature vector with the greatest distance to the centroid, in which case the already stored feature vector is replaced by the vector categorized for the category.

7. Method according to any one of the preceding claims, wherein the measurement data comprise sensor data and camera data, especially CAN-Bus-signals, an acceleration in x- and/or y-direction, a speed, a yaw rate, a braking torque applied by a driver and/or a camera image.

8. Method according to claim 7, wherein the plurality of feature vectors is determined based on the measurement data which is discretized and synchronized, and/or by image feature extraction from camera images with a Convolutional Neural Network, and by forming pre-feature vectors per time step from the sensor data and/or camera data, particularly by reducing a dimensionality of the pre-feature vectors with an auto-encoder to form the plurality of feature vectors.

9. Method according to any one of the preceding claims, wherein the number of measurement categories is determined based on a preset number of categories based on previously recorded vehicle measurement data, e.g. acceleration in the x and/or y direction, speed, yaw rate, driver desired braking torque and image features extracted from camera images preferably by a Convolutional Neural Network.

10. Method according to claim 9, wherein the previously recorded vehicle measurement data is discretized and synchronized forming a pre-feature vector per time step from the previously recorded vehicle measurement data.

11. Method according to claim 10, wherein an intrinsic dimensionality of the pre-feature vectors is determined, and wherein the dimensionality of the pre-feature vectors is reduced with an auto-encoder to form feature vectors.

12. Method according to any one of the preceding claims, wherein sequential feature vectors of the plurality of feature vectors are subsampled at intervals of predefined length.

13. Method according to any one of the preceding claims, wherein a cosine similarity between sequential feature vectors of the plurality of feature vectors after subsampling is calculated.

14. Method according to any one of the preceding claims, wherein a threshold for a selection of feature vectors of the plurality of feature vectors is calculated, chosen such that at maximum half of the feature vectors belongs to measurements with a first measuring vehicle (111) speed while the feature vectors being of a second measuring vehicle (111) speed.

15. Method according to claim 14, wherein feature vectors of the plurality of feature vectors with a cosine similarity greater than or equal to the threshold are selected to exclude outliers from clustering.

16. Method according to claim 15, wherein the determined number of measurement categories is determined for the selected feature vectors with a silhouettes index and k-means clustering, wherein the number of centroids of k-means is varied and/or the local maximum is chosen at low cluster number.

17. Measuring vehicle (111) configured to detect a measuring vehicle environment by recording measurement data, to categorize a plurality of feature vectors derived from the measurement data to a plurality of measurement categories, wherein a number of feature vectors to be recorded in each category of the measurement categories is defined, and to wirelessly communicate with a remote computing system (112), and wherein the measuring vehicle (111) is configured to send an information to the remote computing system (112) indicating that the determined number of recorded feature vectors for a category of the measurement categories is reached, wherein a measurement setting for the measuring vehicle (111) is changed in response to the indication, wherein the change in the measurement setting is a change in a route planning of the measuring vehicle (111).

18. Measuring vehicle (111) according to claim 17, wherein, if a feature vector of the plurality of feature vectors is categorized for a category of the measurement categories, for which the number of required measurements is reached, the feature vector is added to the category, if its, preferably Euclidian, distance to a centroid of the category is greater than the distance of an already stored feature vector with the greatest distance to the centroid, in which case the already stored feature vector is replaced by the vector categorized for the category.

19. Measuring vehicle (111) according to claim 17 or 18, wherein the measuring vehicle selectively records measurement data based on information received by the remote computing system (112).

20. Measuring vehicle (111) according to claims 17-19, wherein the measuring vehicle (111) transmits the recorded measurement data to the remote computing system (112) via a wireless communication network.

21. System (110) configured to perform a method according to claim 1 comprising at least one vehicle according to claim 20 and the remote computing system (112).

**Patentansprüche**

1. Verfahren zum Speichern und Übertragen von Messdaten von einer Flotte von Messfahrzeugen (111), umfassend die folgenden Schritte

   Bestimmen (101) einer Mehrzahl von Messkategorien, wobei die Messkategorie Fahrsituationen entsprechen,
   Bestimmen (102) einer Anzahl von erforderlichen Messungen für jede der bestimmten Messkategorien,
   Starten (103) einer Messkampagne mit der Flotte von Messfahrzeugen (111), um Messdaten aufzuzeichnen, wobei jedes Messfahrzeug (111) ausgestaltet ist, Messdaten gemäß den bestimmten Messkategorien aufzuzeichnen, wobei eine Mehrzahl von aus den Messdaten abgeleiteten Merkmalsvektoren in die bestimmten Messkategorien kategorisiert wird, und
   Ändern (104) einer Messeinstellung für zumindest einige der Flotte von Messfahrzeugen (111) in dem Fall, dass eine Information von mindestens einem Messfahrzeug (111) empfangen wird, die anzeigt, dass die bestimmte Anzahl an erforderlichen Messungen für mindestens eine bestimmte Kategorie erreicht wurde, wobei die Änderung bei der Messeinstellung eine Änderung bei einer Streckenplanung von den zumindest einigen der Flotte von Messfahrzeugen (111) ist.

2. Verfahren nach Anspruch 1, wobei die Messeinstellung anzeigt, dass ein spezifischer Ort oder spezifischer Bereich nicht angefahren werden sollte und/oder dass eine Messung in dem spezifischen Ort oder Bereich, insbesondere für die mindestens eine angezeigte bestimmte Kategorie, deaktiviert werden sollte.

3. Verfahren nach Anspruch 1 oder 2, wobei jedes Messfahrzeug (111) eine Anzahl von für jede Kategorie erfassten Messungen überträgt und wobei die Messeinstellung für zumindest einige der Flotte von Messfahrzeugen (111) geändert wird, um einen spezifischen Bereich oder Ort zu frequentieren und/oder dass eine Messung in dem Bereich oder an dem Ort aktiviert wird, insbesondere für die angezeigte mindestens eine bestimmte Kategorie und in dem Fall, dass eine bestimmte Anzahl an erforderlichen Messungen nicht durch die Fahrzeugflotte erreicht ist.

4. Verfahren nach einem der vorhergehenden Ansprüche, wobei die Messdaten pro Kategorie von zumindest einigen der Messfahrzeuge (111) an ein entferntes Rechensystem (112) über ein drahtloses Kommunikationsnetz übertragen werden.

5. Verfahren nach einem der vorhergehenden Ansprüche, wobei eine Anzeige von mindestens einem Messfahrzeug (111) von dem mindestens einen Messfahrzeug (111) an das entfernte Rechensystem (112) gesendet wird, wenn ein Merkmalsvektor der Mehrzahl von Merkmalsvektoren für eine Kategorie der Kategorien kategorisiert wird, für die die bestimmte Anzahl an erforderlichen Messungen erreicht ist.

6. Verfahren nach einem der vorhergehenden Ansprüche, wobei, wenn ein Merkmalsvektor der Mehrzahl von Merkmalsvektoren für eine bestimmte Messkategorie der bestimmten Messkategorien kategorisiert wird, für die die bestimmte Anzahl an erforderlichen Messungen erreicht wurde oder ist, der Merkmalsvektor zu der Kategorie hinzugefügt wird, wenn sein, vorzugsweise euklidischer, Abstand zu einem Zentrum der Kategorie größer ist als der Abstand eines bereits gespeicherten Merkmalsvektors mit dem größten Abstand zu dem Zentrum, wobei in diesem Fall der bereits gespeicherte Merkmalsvektor durch den für die Kategorie kategorisierten Vektor ersetzt wird.

7. Verfahren nach einem der vorhergehenden Ansprüche, wobei die Messdaten Sensordaten und Kameradaten, insbesondere CAN-Bussignale, eine Beschleunigung in der x- und/oder y-Richtung, eine Geschwindigkeit/Drehzahl, eine Gierrate, ein durch einen Fahrer aufgebrachtes Bremsmoment und/oder ein Kamerabild, umfassen.

8. Verfahren nach Anspruch 7, wobei die Mehrzahl von Merkmalsvektoren basierend auf den Messdaten, die diskretisiert und synchronisiert werden, und/oder durch eine Bildmerkmalsextraktion aus Kamerabildern mit einem neuronalen Faltungsnetz und durch Bilden von Prä-Merkmalsvektoren pro Zeitschritt aus den Sensordaten und/oder Kameradaten, insbesondere durch Reduzieren einer Dimensionalität der Prä-Merkmalsvektoren mit einem Autoencoder bestimmt wird, um die Mehrzahl von Merkmalsvektoren zu bilden.

9. Verfahren nach einem der vorhergehenden Ansprüche, wobei die Anzahl an Messkategorien basierend auf einer voreingestellten Anzahl an Kategorien basierend auf früher aufgezeichneten Fahrzeugmessdaten, z. B. Beschleunigung in der x- und/oder y-Richtung, Geschwindigkeit/Drehzahl, Gierrate, vom Fahrer gewünschtes Bremsmoment und aus Kamerabildern vorzugsweise durch ein neuronales Faltungsnetz extrahierte Bildmerkmale, bestimmt wird.

10. Verfahren nach Anspruch 9, wobei die früher aufgezeichneten Fahrzeugmessdaten diskretisiert und synchronisiert werden, um einen Prä-Merkmalsvektor pro Zeitschritt aus den früher aufgezeichneten Fahrzeugmessdaten zu bilden.

11. Verfahren nach Anspruch 10, wobei eine intrinsische Dimensionalität der Prä-Merkmalsvektoren bestimmt wird, und wobei die Dimensionalität der Prä-Merkmalsvektoren mit einem Autoencoder reduziert wird, um Merkmalsvektoren zu bilden.

12. Verfahren nach einem der vorhergehenden Ansprüche, wobei aufeinanderfolgende Merkmalsvektoren der Mehrzahl von Merkmalsvektoren in Intervallen vorbestimmter Länge unterabgetastet werden.

13. Verfahren nach einem der vorhergehenden Ansprüche, wobei eine Kosinus-Ähnlichkeit zwischen aufeinanderfolgenden Merkmalsvektoren der Mehrzahl von Merkmalsvektoren nach dem Unterabtasten berechnet wird.

14. Verfahren nach einem der vorhergehenden Ansprüche, wobei ein Schwellenwert für eine Auswahl von Merkmalsvektoren der Mehrzahl von Merkmalsvektoren berechnet wird, der derart ausgewählt wird, dass maximal eine Hälfte der Merkmalsvektoren zu Messungen mit einer ersten Messfahrzeug(111)-Geschwindigkeit gehört, wobei die anderen Merkmalsvektoren von einer zweiten Messfahrzeug(111)-Geschwindigkeit sind.

15. Verfahren nach Anspruch 14, wobei Merkmalsvektoren der Mehrzahl von Merkmalsvektoren mit einer Kosinus-Ähnlichkeit größer als oder gleich dem Schwellenwert ausgewählt werden, um Ausreißer aus einem Clustering auszuschließen.

16. Verfahren nach Anspruch 15, wobei die bestimmte Anzahl an Messkategorien für die ausgewählten Merkmalsvektoren mit einem Silhouettenindex und k-Means-Clustering bestimmt wird, wobei die Anzahl an Zentren von k-Means variiert wird und/oder das lokale Maximum bei einer niedrigeren Clusterzahl ausgewählt wird.

17. Messfahrzeug (111), das ausgestaltet ist, eine Messfahrzeugumgebung durch Aufzeichnen von Messdaten zu detektieren, eine Mehrzahl von aus den Messdaten abgeleiteten Merkmalsvektoren in eine Mehrzahl von Messkategorien zu kategorisieren, wobei eine Anzahl an in jeder Kategorie der Messkategorien aufzuzeichnenden Merkmalsvektoren definiert ist, und mit einem entfernten Rechensystem (112) drahtlos zu kommunizieren, und wobei das Messfahrzeug (111) ausgestaltet ist, eine Information an das entfernte Rechensystem (112) zu senden, die anzeigt, dass die bestimmte Anzahl an aufgezeichneten Merkmalsvektoren für eine Kategorie der Messkategorien erreicht ist, wobei eine Messeinstellung für das Messfahrzeug (111) in Reaktion auf die Anzeige geändert wird, wobei die Änderung bei der Messeinstellung eine Änderung bei einer Streckenplanung des Messfahrzeugs (111) ist.

18. Messfahrzeug (111) nach Anspruch 17, wobei, wenn ein Merkmalsvektor der Mehrzahl von Merkmalsvektoren für eine Kategorie der Messkategorien kategorisiert wird, für die die Anzahl an erforderlichen Messungen erreicht ist, der Merkmalsvektor zu der Kategorie hinzugefügt wird, wenn sein, vorzugsweise euklidischer, Abstand zu einem Zentrum der Kategorie größer ist als der Abstand eines bereits gespeicherten Merkmalsvektors mit dem größten Abstand zu dem Zentrum, wobei in diesem Fall der bereits gespeicherte Merkmalsvektor durch den für die Kategorie kategorisierten Vektor ersetzt wird.

19. Messfahrzeug (111) nach Anspruch 17 oder 18, wobei das Messfahrzeug gezielt Messdaten basierend auf von einem entfernten Rechensystem (112) empfangener Information aufzeichnet.

20. Messfahrzeug (111) nach Ansprüchen 17-19, wobei das Messfahrzeug (111) die aufgezeichneten Messdaten an das entfernte Rechensystem (112) über ein drahtloses Kommunikationsnetz überträgt.

21. System (110), das ausgestaltet ist, ein Verfahren nach Anspruch 1 durchzuführen, umfassend mindestens ein Fahrzeug nach Anspruch 20 und das entfernte Rechensystem (112) .

**Revendications**

1. Procédé pour stocker et transmettre des données de mesure venant d'un parc de véhicules de mesure (111), comprenant les étapes consistant à :

   déterminer (101) une pluralité de catégories de mesures, ces catégories de mesures correspondant à des situations de conduite,
   déterminer (102) un certain nombre de mesures requises pour chacune des catégories de mesures déterminées,
   commencer (103) une campagne de mesures avec le parc de véhicules de mesure (111) afin d'enregistrer des données de mesure, chaque véhicule de mesure (111) étant configuré de façon à enregistrer des données de mesure conformément aux catégories de mesures déterminées, une pluralité de vecteurs caractéristiques obtenus à partir de ces données de mesure étant catégorisée dans les catégories de mesures déterminées, et à changer (104) un paramètre de mesure pour au moins quelques-uns des véhicules du parc de véhicules de mesure (111) dans le cas où une information venant d'au moins un véhicule de mesure (111) est reçue indiquant que le nombre déterminé de mesures requises a été atteint pour au moins une catégorie déterminée, ce changement du paramètre de mesure étant un changement d'une planification d'itinéraire des au moins quelques-uns des véhicules du parc de véhicules de mesure (111).

2. Procédé selon la revendication 1, dans lequel le paramètre de mesure indique qu'il ne faut pas s'approcher d'un emplacement spécifique ou d'une zone spécifique et/ou que la mesure devrait être désactivée dans l'emplacement ou la zone spécifique pour l'au moins une catégorie déterminée indiquée.

3. Procédé selon la revendication 1 ou 2, dans lequel chaque véhicule de mesure (111) transmet un certain nombre de mesures obtenues pour chaque catégorie et dans lequel le paramètre de mesure pour au moins quelques-uns des véhicules du parc de véhicules de mesure (111) est changé pour fréquenter une zone ou un emplacement spécifique et/ou que la mesure est activée dans la zone ou à l'emplacement, particulièrement pour l'au moins une catégorie déterminée indiquée et dans le cas où un nombre déterminé de mesures requises n'est pas atteint par le parc de véhicules.

4. Procédé selon l'une quelconque des revendications précédentes, dans lequel les données de mesure par catégorie sont transmises depuis au moins quelques-uns des véhicules de mesure (111) à un système informatique distant (112) via un réseau de communication sans fil.

5. Procédé selon l'une quelconque des revendications précédentes, dans lequel une indication venant d'au moins un véhicule de mesure (111) est envoyée depuis ledit au moins un véhicule de mesure (111) au système informatique distant (112) si un vecteur caractéristique de la pluralité de vecteurs caractéristiques est catégorisé pour une catégorie des catégories, pour laquelle le nombre déterminé de mesures requises est atteint.

EP 3 492 872 B1

**6.** Procédé selon l'une quelconque des revendications précédentes, dans lequel, lorsqu'un vecteur caractéristique de la pluralité de vecteurs caractéristiques est catégorisé pour une catégorie de mesures déterminée des catégories de mesures déterminées, pour laquelle le nombre de mesures requises déterminé a été ou est atteint, le vecteur caractéristique est ajouté à cette catégorie, si sa distance, de préférence euclidienne, par rapport à un centroïde de cette catégorie est plus grande que la distance d'un vecteur caractéristique déjà stocké avec la plus grande distance par rapport au centroïde, auquel cas le vecteur caractéristique déjà stocké est remplacé par le vecteur catégorisé pour cette catégorie.

**7.** Procédé selon l'une quelconque des revendications précédentes, dans lequel les données de mesure comprennent des données de capteur et des données de caméra, particulièrement des signaux bus CAN, une accélération dans une direction x et/ou y, une vitesse, une vitesse de lacet, un couple de freinage appliqué par un conducteur et/ou une image de caméra.

**8.** Procédé selon la revendication 7, dans lequel la pluralité de vecteurs caractéristiques est déterminée en se basant sur les données de mesure qui sont discrétisées et synchronisées, et/ou par extraction de caractéristiques d'image à partir d'images de caméra avec un réseau de neurones convolutionnel, et en formant des vecteurs pré-caractéristiques par intervalle de temps à partir des données de capteur et/ou des données de caméra, particulièrement en réduisant une dimensionnalité des vecteurs pré-caractéristiques avec un auto-encodeur afin de former la pluralité de vecteurs caractéristiques.

**9.** Procédé selon l'une quelconque des revendications précédentes, dans lequel le nombre de catégories de mesures est déterminé en se basant sur un nombre prédéterminé de catégories basé sur des données de mesure de véhicule enregistrées antérieurement, par exemple accélération dans la direction x et/ou y, vitesse, vitesse de lacet, couple de freinage désiré du conducteur et caractéristiques d'image extraites d'images de caméra, de préférence par un réseau de neurones convolutionnel.

**10.** Procédé selon la revendication 9, dans lequel les données de mesure de véhicule enregistrées antérieurement sont discrétisées et synchronisées, formant un vecteur pré-caractéristique par intervalle de temps à partir des données de mesure de véhicule enregistrées antérieurement.

**11.** Procédé selon la revendication 10, dans lequel une dimensionnalité intrinsèque des vecteurs pré-caractéristiques est déterminée, et dans lequel cette dimensionnalité intrinsèque des vecteurs pré-caractéristiques est réduite par un auto-encodeur pour former des vecteurs caractéristiques.

**12.** Procédé selon l'une quelconque des revendications précédentes, dans lequel des vecteurs caractéristiques séquentiels de la pluralité de vecteurs caractéristiques sont sous-échantillonnés à des intervalles d'une longueur prédéfinie.

**13.** Procédé selon l'une quelconque des revendications précédentes, dans lequel une similarité cosinus entre des vecteurs caractéristiques séquentiels de la pluralité de vecteurs caractéristiques après le sous-échantillonnage est calculée.

**14.** Procédé selon l'une quelconque des revendications précédentes, dans lequel un seuil pour une sélection de vecteurs caractéristiques de la pluralité de vecteurs caractéristiques est calculé, étant choisi de manière à ce qu'au maximum une moitié des vecteurs caractéristiques appartienne à des mesures avec une première vitesse de véhicule de mesure (111) tandis que les autres vecteurs caractéristiques sont ceux d'une deuxième vitesse de véhicule de mesure (111).

**15.** Procédé selon la revendication 14, dans lequel des vecteurs caractéristiques de la pluralité de vecteurs caractéristiques avec une similarité cosinus plus grande que ou égale au seuil sont sélectionnés afin d'exclure les valeurs aberrantes du partitionnement de données.

**16.** Procédé selon la revendication 15, dans lequel le nombre déterminé de catégories de mesures est déterminé pour les vecteurs caractéristiques sélectionnés avec un partitionnement à index de silhouettes et en k-moyennes, le nombre de centroïdes de k-moyennes étant varié et/ou le maximum local étant choisi à un petit nombre de groupes.

**17.** Véhicule de mesure (111) configuré de façon à détecter un environnement de véhicule de mesure en enregistrant des données de mesure, afin de catégoriser une pluralité de vecteurs caractéristiques obtenus à partir des données de mesure en une pluralité de catégories de mesures, un certain nombre de vecteurs caractéristiques à enregistrer dans chaque catégorie des catégories de mesures étant défini, et de façon à communiquer sans fil avec un système informatique distant (112), et

ce véhicule de mesure (111) étant configuré de façon à envoyer une information au système informatique distant (112) indiquant que le nombre déterminé de vecteurs caractéristiques enregistrés pour une catégorie des catégories de mesures est atteint, un paramètre de mesure pour le véhicule de mesure (111) étant changé en réponse à cette indication, ce changement du paramètre de mesure étant un changement d'une planification d'itinéraire du véhicule de mesure (111) .

18. Véhicule de mesure (111) selon la revendication 17, dans lequel, si un vecteur caractéristique de la pluralité de vecteurs caractéristiques est catégorisé pour une catégorie des catégories de mesures, pour laquelle le nombre de mesures requises est atteint, le vecteur caractéristique est ajouté à cette catégorie, si sa distance, de préférence euclidienne, par rapport à un centroïde de cette catégorie est plus grande que la distance d'un vecteur caractéristique déjà stocké avec la plus grande distance par rapport au centroïde, auquel cas le vecteur caractéristique déjà stocké est remplacé par le vecteur catégorisé pour cette catégorie.

19. Véhicule de mesure (111) selon la revendication 17 ou 18, ce véhicule de mesure enregistrant sélectivement des données de mesure en se basant sur des informations reçues par le système informatique distant (112).

20. Véhicule de mesure (111) selon les revendications 17 à 19, ce véhicule de mesure (111) transmettant les données de mesure enregistrées au système informatique distant (112) via un réseau de communication sans fil.

21. Système (110) configuré de façon à exécuter un procédé selon la revendication 1, comprenant au moins un véhicule selon la revendication 20 et le système informatique distant (112).

Input layer    Hidden layer    Output layer

Encoder         Decoder

Fig. 1

| 1,146 signals from vehicle bus | Front camera data |

• Acceleration
  (x-direction)
• Acceleration
  (y-direction)
• Velocity
• Yaw velocity
• Braking torque
  (requested)

Radar sensor:
Positions of objects

Feature extraction:
AlexNet fc7

Cluster – description of environment

Cluster – description of situation

Fig. 2

Fig. 3

Fig. 4

Observation index

Fig. 5

Fig. 6

determining a number of measurement categories — 101

determining a number of required measurements for each of the determined measurement categories — 102

starting a measurement campaign with a number of measuring vehicles, wherein each measuring vehicle is configured with the determined categories — 103

changing a measurement setting for at least some of the number of measuring vehicles in case an information from at least one measuring vehicle is received indicating that a determined number of required measurements has been reached for at least one determined category — 104

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015221216 A1

- DE 102008012661 A1

### Non-patent literature cited in the description

- **J. A. FARRELL et al.** *Best Practices for Surveying and Mapping Roadways and Intersections for Connected Vehicle Applications,* 15 May 2016, http://www.cts.virginia.edu/wp-content/uploads/2014/04/ Mapping-Final-Report-FINAL-20160915.pdf
- **OLATZ ARBELAITZ ; IBAI GURRUTXAGA ; JAVIER MUGUERZA ; JES_US M ; P_EREZ ; I~NIGO PERONA.** An extensive comparative study of cluster validityindices. *Pattern Recognition,* 2013, vol. 46 (1), 243-256
- k-means++: the advantagesof careful seeding. **DAVID ARTHUR ; SERGEI VASSILVITSKII.** Proceedings of the Eighteenth Annual ACM-SIAM Sympo-sium on Discrete Algorithms, SODA 2007. SIAM, 07 January 2007, 1027-1035
- Driving word2vec:Distributed semantic vector representation for symbolized naturalisticdriving data. **YUSUKE FUCHIDA ; TADAHIRO TANIGUCHI ; TOSHIAKI TAKANO ; TAKUMAMORI ; KAZUHITO TAKENAKA ; TAKASHI BANDO.** In 2016 IEEE Intelligent Vehicles Symposium. IEEE, 19 June 2016, 1313-1320
- **BRYAN HIGGS ; MONTASIR M. ABBAS.** Segmentation and clustering ofcar-following behavior: Recognition of driving patterns. *IEEE Trans.Intelligent Transportation Systems,* 2015, vol. 16 (1), 81-90
- **PEG HOWLAND ; MOONGU JEON ; HAESUN PARK.** Structure preservingdimension reduction for clustered text data based on the generalizedsingular value decomposition. *SIAM J. Matrix Analysis Applications,* 2003, vol. 25 (1), 165-179
- **JOE H. WARD JR.** Hierarchical grouping to optimize an objective function. *Journal of the American Statistical Association,* 1963, vol. 58 (301), 236-244
- Imagenetclassi_cation with deep convolutional neural networks. **ALEX KRIZHEVSKY ; ILYA SUTSKEVER ; GEO_REY E. HINTON.** Advances in Neural Information Processing Systems 25: 26th Annual Conference on Neu-ral Information Processing Systems 2012. Proceedings of a meetingheld December 3-6, 2012. 03 December 2012, 1106-1114

- **FIONN MURTAGH ; PIERRE LEGENDRE.** Ward's hierarchical agglomerativeclustering method: Which algorithms implement ward's criterion?. *J. Classi_cation,* 2014, vol. 31 (3), 274-295
- **MARTIN FODSLETTE M_LLER.** A scaled conjugate gradient algorithm for fast supervised learning. *Neural Networks,* 1993, vol. 6 (4), 525-533
- **R. OSTROVSKY ; Y. RABANI ; L. J. SCHULMAN ; C. SWAMY.** The effectivenessof lloyd-type methods for the k-means problem. *In 200647th Annual IEEE Symposium on Foundations of Computer Science (FOCS'06),* October 2006, 165-176
- **PETER J. ROUSSEEUW.** Silhouettes: A graphical aid to the interpretation and validation of cluster analysis. *Journal of Computational and Applied Mathematics,* 1987, vol. 20, 53-65
- **HUGO STEINHAUS.** Sur la division des corps mat_eriels en parties. *Bull.Acad. Polon. Sci. Cl. III.,* 1956, vol. 4, 801-804
- **LUCAS VENDRAMIN ; RICARDO J. G. B. CAMPELLO ; EDUARDO R. HRUSCHKA.** Relative clustering validity criteria: A comparative overview. *Statistical Analysis and Data Mining,* 2010, vol. 3 (4), 209-235
- **YASI WANG ; HONGXUN YAO ; SICHENG ZHAO.** Auto-encoder baseddimensionality reduction. *Neurocomputing,* 2016, vol. 184, 232-242
- **XINDONG WU ; XINGQUAN ZHU ; GONG-QING WU ; WEI DING.** Datamining with big data. *IEEE Trans. Knowl. Data Eng.,* 2014, vol. 26 (1), 97-107
- BIRCH: ane_cient data clustering method for very large databases. **TIAN ZHANG ; RAGHU RAMAKRISHNAN ; MIRON LIVNY.** Proceedings of the 1996ACM SIGMOD International Conference on Management of Data. ACMPress, 04 June 1996, 103-114